Europäisches Patentamt

European Patent Office

Office européen des brevets

(19)

(11) Veröffentlichungsnummer : **0 310 561 B1**

# (12) EUROPÄISCHE PATENTSCHRIFT

(45) Veröffentlichungstag der Patentschrift :
**22.07.92 Patentblatt 92/30**

(51) Int. Cl.[5] : **B01J 19/02, B01F 15/00**

(21) Anmeldenummer : **88810663.0**

(22) Anmeldetag : **27.09.88**

---

(54) **Verfahren zum Herstellen von Rührern für Reaktionsbehälter.**

---

(30) Priorität : **28.09.87 CH 3756/87**

(43) Veröffentlichungstag der Anmeldung :
**05.04.89 Patentblatt 89/14**

(45) Bekanntmachung des Hinweises auf die
Patenterteilung :
**22.07.92 Patentblatt 92/30**

(84) Benannte Vertragsstaaten :
**CH DE FR GB IT LI**

(56) Entgegenhaltungen :
**EP-A- 0 211 279**
**DE-A- 2 046 709**
**GB-A- 2 120 975**
**GB-A- 2 134 845**

(56) Entgegenhaltungen :
**US-A- 4 607 959**
**CHEMTECH, Nr. 7, Juli 1973, Seiten**
**389,390,448, American Chemical Society, Was-**
**hington, US; N.C.W. JUDD et al.:**
**"Compositesfor chemical process equip-**
**ment"**

(73) Patentinhaber : **PAUL WELKER AG**
**Solothurnerstrasse 57**
**CH-4008 Basel (CH)**

(72) Erfinder : **Welker, Ivar, Dr.**
**Kreuzackerhägli 5**
**CH-4103 Bottmingen (CH)**

(74) Vertreter : **Becher, Pauline, Dr. et al**
**A. Braun, Braun, Héritier, Eschmann AG**
**Patentanwälte Holbeinstrasse 36-38**
**CH-4051 Basel (CH)**

---

## Beschreibung

Die Erfindung bezieht sich auf ein Verfahren gemäss dem Oberbegriff des unabhängigen Patentanspruchs.

Wenn in der chemischen Industrie ein Korrosionsschutz durch die Wahl geeignete! Werkstoffe nicht möglich, z.B. nicht wirtschaftlich,ist, verwendet man unter anderem Verbundsysteme, die aus einem preisgünstigen Grundwerkstoff mit guten mechanischen Eigenschaften und einer verhältnismässig dünnen Auflage eines korrosionsbeständigen Werkstoffes bestehen. Neben metallischen Auflagewerkstoffen kommen nichtmetallische Werkstoffe in Betracht, die anorganisch oder organisch sein können. Nichtmetallische anorganische Auflagewerkstoffe sind Glasemail, Glaskeramik und thermisch gespritzte Schichten aus z.B. Oxiden, Carbiden und Nitriden.

Organische Beschichtungen für den Korrosionsschutz bestehen aus Gummi oder Kunstharzen, besonders Thermoplasten, Elastomeren und Duroplasten. Bekannt ist z.B. der Schutz von Apparaten, Rohrleitungen, Lager- und Transportbehältern mit Folien aus Natur- und Synthesekautschuken. Entsprechend werden auch Duromerbeschichtungen auf der Basis graphithaltiger Phenol-, Epoxid- oder Furanharze aufgebracht. Das Endvernetzen geschieht dabei in Werkstattautoklaven. Abgesehen von einer verminderten Beständigkeit dieser graphithaltigen Harze gegen stark oxidierende Medien haben sie praktisch universelle Beständigkeitseigenschaften. Allerdings muss eine verminderte Bruchdehnung in Kauf genommen werden. Unter dem Einfluss der thermischen Belastung platzen derartige Beschichtungen leicht vom Grundwerkstoff ab.

Faserverbundstoffe und ihre Herstellung sind bekannt. Sie werden z.B. bei der Fabrikation von Autokarosserien, in der Regel aus glasfaserverstärkten Polyesterharzen, verwendet. Kohlefaserverstärkte Epoxidharze dienen in der Hauptsache zur Herstellung von Verschalungsteilen im Flugzeugbau, aber auch für Surfbretter, Skier, Tennisschläger, Gestelle für Solarzellen für Satelliten und Antriebswellen. Antriebswellen und dergleichen werden im Wickelverfahren hergestellt, wobei zur Zeit Aluminiumkerne verwendet werden, die hydraulisch aus der Welle herausgezogen werden, so dass die Welle aus einem Hohlkörper besteht.

Die Belegung (das heisst, die Anzahl der Schichten und die Orientierung der Fasern) eines mit derartigen Faserverbundstoffen im Wickelverfahren hergestellten Werkstückes hängt von der mechanischen Beanspruchung ab und variiert von Werkstück zu Werkstück. Die Belegung entspricht somit der Wandstärke eines mechanisch hergestellten Werkstückes. Die Patentinhaberin hat schon Rührer aus auf Stahlkerne laminiertem (gewickeltem) kohlefaserverstärktem Phenolharz hergestellt. Die Stahlkerne sind aber schwer, so dass Kräne oder Laufkatzen zum Transport der Rührer erforderlich sind.

Es ist beispielsweise aus EP-A-0 211 279 bekannt, auf einem Kern eine Hohlwelle aus faserverstärktem Kunststoffmaterial aufzuwickeln und auf der Hohlwelle weitere Composite-Schichten aufzubringen. Im Hinblick auf die nachträgliche Entfernung des Kernes ist es aber bisher nicht gelungen, die stark schrumpfenden Furan- und Phenolharze im Wickelverfahren einzusetzen, zumal deren schwer steuerbare Topfzeiten ein weiteres Hindernis für deren Verwendung darstellten.

Es ist daher die Aufgabe der vorliegenden Erfindung, ein Verfahren der eingangs beschriebenen Art vorzuschlagen, das erstens den Einsatz der hoch-beständigen Furan- und Phenolharze gestattet, ohne den Kernabzug zu beeinträchtigen, zweitens die beliebige Formgestaltung des Kernes einschliesslich Hinterschneidungen etc. zulässt und sich drittens durch seine Unkompliziertheit auszeichnet.

Das erfindungsgemässe Verfahren ist im kennzeichnenden Teil des unabhängigen Patentanspruchs definiert.

Die Wahl des Harzes hängt von der erforderlichen chemischen und thermischen Beständigkeit ab. So sind Furanharze bis 230 oder sogar 250°C beständig, Phenolharze bis ca. 170°C. Phenol- und Furanharze sind säure-, laugen- und lösungsmittelbeständig.

Der Schaumstoffkern besteht zweckmässig aus einem gut bearbeitbaren Hartschaumstoff; er kann mit Lösungsmitteln aus dem Rührer herausgelöst oder bei einer Temperatur herausgeschmolzen oder zerstört werden, die unterhalb der Zerstörungstemperatur des benutzten Phenol- oder Foranharzes, aber oberhalb des Schmelzpunktes liegt, so dass der fertige Rührer hohl ist und vollständig aus dem kohlefaserverstärkten Harz besteht. Schaumstoffe auf der Basis von Polystyrol oder Polyurethan haben sich für beide Verfahrensvarianten bewährt.

## Patentansprüche

1. Verfahren zum Herstellen von Rührern für Reaktionsbehälter für den Einsatz in der chemischen Industrie, wobei ein Kern ohne Verwendung einer Form mit einem kohlefaserverstärkten Kunstharz umwickelt wird, dadurch gekennzeichnet, dass der Kern aus einem Hartschaumstoff herausgearbeitet, mit einem Furan- oder Phenolharz umwickelt und nach dem Aushärten desselben aus dem Rührer herausgelöst oder herausgeschmolzen wird.

2. Verfahren nach Anspruch 1, dadurch gekennzeichnet, dass für den Kern ein Hartschaumstoff auf der Basis von Polystyrol oder Polyurethan verwendet wird.


**Claims**

1. Process for producing agitators for reaction vessels for use in the chemical industry, a core being wound with a carbon-fibre-reinforced synthetic resin without the use of a mould, characterised in that the core is cut out from a rigid foam, wound with a furane or phenolic resin and, after curing of the same, dissolved or melted out of the agitator.

2. Process according to Claim 1, characterised in that a rigid foam based on polystyrene or polyurethane is used for the core.


**Revendications**

1. Procédé de fabrication d'agitateurs pour des récipients de réaction à mettre en oeuvre dans l'industrie chimique, suivant lequel un noyau est enveloppé d'une résine synthétique armée de fibres de carbone sans utiliser de forme, caractérisé en ce que le noyau est usiné dans une mousse dure, enveloppé d'une résine furannique ou phénolique et, après durcissement de celle-ci, éliminé de l'agitateur par dissolution ou fusion.

2. Procédé suivant la revendication 1, caractérisé en ce qu'une mousse dure à base de polystyrène ou de polyuréthanne est utilisée pour le noyau.